# FASCICULE DE BREVET EUROPEEN

(11) **EP 3 810 912 B1**
(45) Date de publication et mention de la délivrance du brevet: **09.02.2022**
(21) Numéro de dépôt: 19731298.6
(22) Date de dépôt: 21.06.2019
(51) Int. Cl.: F02C 7/36, F01D 15/10, F02C 3/067, H02K 7/18

(54) **TURBORÉACTEUR À TRANSMISSION HYBRIDE**
STRAHLTRIEBWERK MIT HYBRIDGETRIEBE
HYBRID TRANSMISSION TURBOJET ENGINE

(30) Priorité: 22.06.2018 BE 201805439
(43) Date de publication de la demande: 28.04.2021
(73) Titulaire: Safran Aero Boosters SA, 4041 Herstal (BE)
(72) Inventeur: MALJEAN, Stéphane, 4340 Othée (BE)
(74) Mandataire: Lecomte & Partners
(86) Numéro de dépôt international: PCT/EP2019/066434
(87) Numéro de publication internationale: WO 2019/243558

(56) Documents cités:
- EP-A2- 2 728 140
- WO-A1-2015/065720
- WO-A1-2018/063610
- DE-A1-102014 218 539
- US-A1- 2016 369 702

## Description

### Domaine technique

L'invention concerne la conception d'une turbomachine, notamment un turboréacteur d'avion ou un turbopropulseur d'aéronef avec une soufflante entraînée par un réducteur. L'invention a également trait à des procédés de mise en œuvre d'un tel turboréacteur.

### Technique antérieure

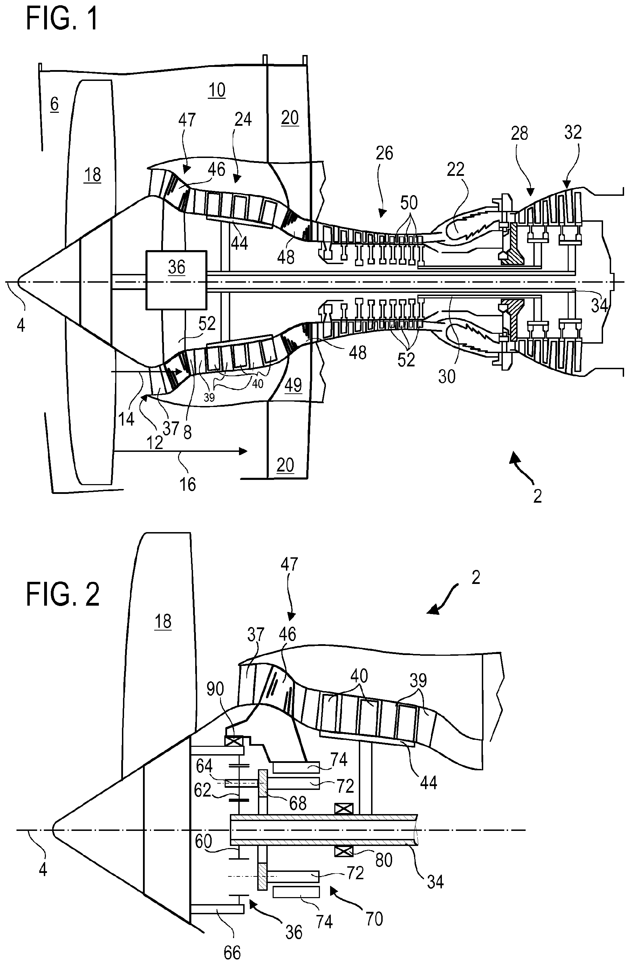

Le document US 2010/0326050 A1 décrit une turbomachine avec un compresseur à rotors contrarotatifs. Un arbre de transmission entraîne la soufflante et des premières aubes rotoriques (notées 17 sur la figure 2 du document cité ci-dessus). Des pignons dont les axes sont fixes par rapport au carter assurent le transfert de l'énergie de rotation à des deuxièmes aubes rotoriques (65) qui tournent en sens opposé aux premières aubes. Une génératrice électrique est prévue, dont un rotor interne est solidaire des premières aubes et un rotor externe est solidaire des deuxièmes aubes, de sorte à produire un courant électrique résultant de la rotation de l'arbre de transmission.

Si cette conception permet de transformer une énergie mécanique en énergie électrique, il n'est pas possible de réinjecter l'énergie électrique dans l'énergie mécanique nécessaire au vol de l'avion. Ainsi, les pignons ayant des axes fixes, le réducteur a un rapport de réduction invariable. La conception d'une telle turbomachine est donc perfectible en termes de consommation d'énergie, de type d'énergie utilisable et/ou dans sa flexibilité d'utilisation.

### Résumé de l'invention

### Problème technique

L'invention a pour objectif de proposer un turboréacteur qui consomme moins d'énergie fossile que les turboréacteurs connus. Plus précisément, l'invention a pour objectif de favoriser une utilisation flexible des énergies qui peuvent alimenter le turboréacteur et vise à optimiser l'utilisation de ces énergies en fonction des conditions d'emploi du turboréacteur. Un turboréacteur selon l'art antérieur est également divulgué dans le document US 2016/369702 A1.

### Solution technique

L'invention a pour objet un turboréacteur d'aéronef, comprenant : un train épicycloïdal comprenant un planétaire interne, une couronne et un porte-satellite ; une turbine entraînant en rotation un arbre de transmission solidaire en rotation avec le planétaire interne du train épicycloïdal ; une soufflante solidaire de la couronne du train épicycloïdal ; et une machine électrique comprenant un rotor et un stator, le rotor étant solidaire du porte-satellite du train épicycloïdal, et l'axe de rotation du rotor du moteur électrique étant confondu à l'axe de rotation de l'arbre de transmission.

Alternativement, l'invention a également pour objet un turboréacteur d'aéronef, comprenant : un train épicycloïdal comprenant un planétaire interne, une couronne et un porte-satellite ; une turbine entraînant en rotation un arbre de transmission solidaire en rotation avec le planétaire interne du train épicycloïdal ; une soufflante solidaire du porte-satellite du train épicycloïdal ; et une machine électrique comprenant un rotor et un stator, le rotor étant solidaire de la couronne du train épicycloïdal, et l'axe de rotation du rotor du moteur électrique étant confondu à l'axe de rotation de l'arbre de transmission.

Selon des modes avantageux de l'invention, le turboréacteur peut comprendre une ou plusieurs des caractéristiques suivantes:
- des moyens de variation de la vitesse et du sens de rotation du rotor du moteur électrique. Ces moyens peuvent comprendre des circuits électriques tels des redresseurs, variateurs, inverseurs, etc. Ces moyens peuvent également être mécaniques, tel un variateur à courroie, un pignon de sortie d'arbre moteur, etc. ;
- un compresseur basse-pression et un compresseur haute-pression, le compresseur basse-pression étant entraîné en rotation directement par l'arbre de transmission et le compresseur haute-pression étant entraîné en rotation par l'arbre de transmission via un train d'engrenage ;
- le train d'engrenage est tel que les rotors des compresseurs tournent dans des sens opposés l'un de l'autre ;
- chaque compresseur inclut un redresseur en aval d'une rangée annulaire d'aubes rotoriques, le redresseur pouvant être fait d'aubes tournant en sens opposé des aubes rotoriques ;
- au moins un compresseur muni d'aubes rotoriques contrarotatives, au moins une rangée d'aubes rotoriques étant entraînées par l'arbre de transmission et au moins une rangée d'aubes rotoriques étant entraînées en direction opposée par le moteur électrique ;
- le stator du moteur électrique est solidaire du carter du turboréacteur ;
- des moyens mécaniques sont prévus pour solidariser le rotor et le stator du moteur électrique, notamment un embrayage frein. Alternativement, des doigts électromagnétiques peuvent venir s'interposer dans des logements prévus à cet effet ;
- une turbine basse-pression et une turbine haute-pression, l'arbre de transmission solidaire du planétaire intérieur étant entraîné par la turbine basse-pression.

L'invention a également trait à des procédés de mise en œuvre du turboréacteur. Ces différentes utilisations d'un même système illustrent différents aspects avantageux du turboréacteur selon l'invention.

Ainsi, la mise en œuvre du turboréacteur selon l'invention peut comprendre :
- une étape de récupération d'énergie cinétique lors de laquelle le moteur électrique est utilisé en générateur. En effet, le moteur électrique et les moyens électroniques de contrôle associés permettent au moteur électrique de fonctionner en générateur et donc de délivrer de l'énergie électrique à des batteries ou à des instruments ou appareils à bord de l'avion ;
- une étape de régulation de la vitesse et du sens de rotation du moteur électrique afin d'obtenir, à partir d'une vitesse mesurée de rotation de l'arbre de transmission, une vitesse de rotation de consigne de la soufflante. Une boucle de rétroaction permet d'obtenir la vitesse souhaitée pour la soufflante (responsable à environ 80% de la poussée d'un aéronef) quelque soit la vitesse de l'arbre de transmission.
- une étape de régulation du couple délivré par le moteur électrique afin d'obtenir, à partir d'un couple mesuré de l'arbre de transmission, un couple de consigne de la soufflante. De la même manière que pour la vitesse, le moteur électrique peut être contrôlé en couple. Un couple peut être considéré comme négatif lorsque le moteur fonctionne en générateur ;
- une étape de blocage mécanique du moteur électrique. Par des moyens de préférence mécanique, le moteur électrique peut être bloqué. En d'autres termes, son rotor est maintenu fixe et solidaire du stator. Ceci a pour conséquence de faire fonctionner le train épicycloïdal comme un réducteur simple. Selon que la soufflante soit solidaire des axes des satellites ou de la couronne, la soufflante tournera en sens inverse ou dans le même sens que l'arbre de transmission ;
- une étape de maintenance lors de laquelle la soufflante est maintenue fixe et la turbine est entraînée en rotation par le moteur électrique. « Maintenance » est à comprendre au sens large et incluant une inspection, des tests, un montage/démontage de certains ensembles du turboréacteur, etc. Il peut par exemple être nécessaire de vérifier que la rotation de la turbine se fait sans encombre et donc l'entraîner directement par le moteur électrique est possible lorsque la soufflante est maintenue fixe. Le maintien de la soufflante peut être effectué manuellement ou à l'aide d'un outil d'atelier dédié à cet effet comme par exemple un structure mécano-soudée attachée aux aubes et fixée à un bâti fixe de l'atelier ;
- une étape de roulage au sol effectuée grâce à la rotation de la soufflante uniquement entraînée par le moteur électrique. L'arbre de transmission ou la turbine est équipé d'un frein, par exemple électromécanique, pouvant être actionné pour maintenir l'arbre et la turbine fixe lors d'un tel roulage au sol. Ceci permet d'éviter la pollution due à l'utilisation de carburant sur le tarmac.

### Avantages apportés

Le turboréacteur de l'invention offre d'innombrables possibilités d'entraînement de la soufflante. En particulier, lors de certaines manœuvres en vol, il peut être nécessaire de rapidement faire évoluer la vitesse de la soufflante. Un gradient important de la vitesse de la soufflante peut prendre beaucoup de temps notamment à cause de l'inertie de l'ensemble tournant. Le turboréacteur selon l'invention permet, lorsque le moteur électrique est commandé de façon appropriée, de pallier cette inertie et donc de rendre les commandes de l'appareil plus directes.

Outre les avantages sur la consommation en énergie fossile, le turboréacteur selon l'invention permet donc d'améliorer potentiellement la sécurité de l'avion.

### Brève description des dessins

La figure 1 représente un turboréacteur selon l'invention ;
La figure 2 représente une partie du turboréacteur selon un premier mode de réalisation l'invention ;
La figure 3 représente une partie de turboréacteur selon un deuxième mode de réalisation l'invention ;
La figure 4 illustre une partie de turboréacteur selon un troisième mode de réalisation l'invention ;
La figure 5 représente un procédé selon l'invention.

### Description des modes de réalisation

Dans la description qui va suivre, les termes « interne » (ou « intérieur ») et « externe » (ou « extérieur ») renvoient à un positionnement par rapport à l'axe de rotation du turboréacteur. La direction axiale correspond à la direction le long de l'axe de rotation du turboréacteur. La direction radiale est perpendiculaire à l'axe de rotation. L'amont et l'aval sont en référence au sens d'écoulement principal du flux dans le turboréacteur. Le terme « solidaire » est compris comme solidaire en rotation, et notamment rigidement lié.

Par abus de langage, l'expression le « compresseur tourne » ou toute expression équivalente signifie que le rotor d'un tel compresseur est en mouvement de rotation. De même, la vitesse de rotation du moteur électrique désigne par abus de langage la vitesse de rotation du rotor du moteur électrique.

Les figures représentent les éléments de manière schématique, notamment sans les éléments d'assemblage ou d'étanchéité.

La figure 1 représente un turboréacteur 2 double-flux.

Le turboréacteur 2 présente un axe de rotation 4 pouvant également former un axe de symétrie axiale. Le turboréacteur 2 présente une entrée annulaire 6 se divisant en une veine primaire 8 et en une veine secondaire 10 grâce à un bec de séparation 12 de forme circulaire. Ces veines 8 et 10 sont empruntées par, respectivement, un flux primaire 14 et un flux secondaire 16, qui se rejoignent en sortie du turboréacteur. Les flux primaire 14 et secondaire 16 sont des flux annulaires coaxiaux et emmanchés l'un dans l'autre.

Le flux secondaire 16 est accéléré par une soufflante 18, notamment disposée en entrée 6, si bien qu'une réaction de poussée peut être générée. Celle-ci peut être employée pour le vol d'un aéronef. Des pales de diffuseur 20 peuvent être disposées dans la veine secondaire 10 et être configurées afin d'augmenter la composante axiale de la vitesse du flux secondaire. La soufflante peut être disposée en amont de la veine primaire 8 et de la veine secondaire 10, notamment à distance axialement de ces veines.

Alternativement, la soufflante peut être du type non carénée, par exemple à double rotor contrarotatifs. Elle peut être placée autour de la veine primaire.

Le turboréacteur 2 comprend une zone de compression, une chambre de combustion 22 et une zone de détente du flux primaire 14. La zone de compression est formée par deux compresseurs, dont un compresseur amont 24 et un compresseur aval 26. Le compresseur aval 26, également appelé compresseur haute-pression, peut être placé en entrée de la chambre de combustion 22.

En aval de la chambre de combustion 22, le turboréacteur 2 peut présenter une turbine haute-pression 28 couplée à un arbre haute-pression 30, puis une turbine basse-pression 32 couplée à un arbre basse-pression 34. Les arbres 30, 34 peuvent tourner à des vitesses différentes l'une de l'autre et être emmanchés l'un dans l'autre. Ces turbines 28, 32 peuvent former la zone de détente du flux primaire 14.

Les rotors des compresseurs 24, 26 peuvent être fixés aux arbres respectifs 30, 34 via des flasques ou des disques.

En fonctionnement, la puissance mécanique reçue des turbines 28, 32 est transmise via les arbres 30, 34 de façon à mettre en mouvement les compresseurs 24, 26. Ces derniers comportent plusieurs rangées d'aubes de rotor associées à des rangées d'aubes de stator. La rotation des rotors autour de leur axe de rotation 4 permet ainsi de générer un débit d'air et de comprimer progressivement ce dernier jusqu'à l'entrée de la chambre de combustion 22. La soufflante 18 est entraînée en rotation par l'intermédiaire de moyens de démultiplication, tel un réducteur 36 à train épicycloïdal qui sera décrit plus en détails ci-dessous. Ainsi, il n'y a pas besoin de prévoir trois turbines pour entraîner les deux compresseurs 24, 26 et la soufflante 18 à des vitesses de rotation différentes.

En entrée de la veine 8 figure une première rangée annulaire d'aubes statoriques 37 à proximité du bec 12.

Le compresseur basse-pression 24 comprend des aubes statoriques 39 et des aubes rotoriques 40 intercalées entre les aubes statoriques 39. Le compresseur 24 peut optionnellement se terminer par deux rangées successives d'aubes statoriques 39.

Dans une variante non illustrée, au moins une des rangées statoriques 39 est remplacée par une rangée d'aubes rotoriques contrarotatives, c'est-à-dire de sens de rotation contraire aux aubes 40. Les aubes rotoriques 40 peuvent être supportées par un rotor 44 pouvant être solidaire de l'arbre 34.

Le stator du turboréacteur 2 peut comprendre plusieurs carters support, dont un carter amont 47 et un carter aval 49 disposés de part et d'autre du compresseur basse-pression 24, également appelé carter intermédiaire. Ces carters 47, 49 peuvent comprendre des manches annulaires formant des tronçons axiaux de la veine primaire 8. Ils peuvent présenter des bras de support sensiblement radiaux (dits « struts ») 46, 48 traversant radialement la veine 8. Les manches annulaires peuvent présenter des profils en col de cygne. Elles peuvent marquer des réductions de diamètre de la veine primaire 8, tout comme sa convergence progressive.

Le carter amont 47 et ses bras 46 peuvent supporter le réducteur 36. Il peut également supporter un ou plusieurs paliers pour supporter en rotation, la soufflante 18, l'arbre 34, ou des parties tournantes du réducteur 36.

En aval des bras 48 figure le compresseur haute-pression 26 muni d'aubes statoriques 50 et rotoriques 52. Ces dernières étant entraînées en rotation au moyen de l'arbre 30. Dans d'autres modes de réalisation, les aubes rotoriques du compresseur haute-pression 26 peuvent être entraînées par l'arbre 34 ou le rotor du compresseur basse-pression 28, éventuellement via un réducteur.

La figure 2 illustre une partie agrandie du turboréacteur 2 de la figure 1, avec un focus sur le réducteur 36, dans un premier mode de réalisation.

Le réducteur 36 comprend un planétaire intérieur 60 solidaire de l'arbre de transmission 34. Des satellites 62 dont seul un est visible sur la coupe de la figure 2 engrènent avec le planétaire intérieur 60. Les satellites 62 peuvent avoir un double mouvement de rotation, autour de leur axes 64 et autour de l'axe 4. Par abus de langage, nous parlerons dans la présente demande de l'axe 64 pour désigner à la fois l'axe géométrique d'axisymétrie d'un satellite 62 et l'axe physique ou pion, autour duquel le satellite 62 tourne.

Une couronne 66 (aussi appelée planétaire externe) engrène avec les satellites 62.

Dans l'exemple de réalisation de la figure 2, la soufflante 18 est solidaire de la couronne 66.

Les axes 64 sont assemblés à un anneau porte-satellite 68. Ainsi, lorsque les satellites 62 parcourent l'espace interplanétaire, le porte-satellite 68 tourne sur lui-même autour de l'axe 4. Un moteur électrique 70 est prévu pour fournir ou récupérer de l'énergie électrique vers/à partir du mouvement du porte-satellite 68. Ce dernier est solidaire du rotor 72 du moteur électrique 70 alors que le stator 74 du moteur électrique 70 est fixe par rapport au carter 47.

De par cet arrangement, plusieurs modes de fonctionnement sont possibles. Lorsque le moteur 70 est bloqué par des moyens appropriés, le train 36 se comporte comme un engrenage simple et la soufflante 18 tourne à une vitesse plus lente que l'arbre 34, avec un rapport des vitesses fixe et dicté par le rapport des diamètres des éléments du train 36. Lorsque le moteur 70 n'est pas alimenté, le rotor 72, entraîné par le porte-satellite 68, tourne et le moteur 70 génère un courant électrique.

Lorsque le moteur 70 est alimenté, il force une rotation du porte-satellite 68 à une vitesse donnée et dans un sens donné. Ceci permet d'agir sur la démultiplication du train 36 et donc d'obtenir une vitesse de la soufflante 18 désirée quelque soit la vitesse de la turbine 34. Le rapport de réduction du train 36 est donc continûment ajustable.

Des paliers 80, 90 adaptés peuvent supporter l'arbre 34 et la couronne 66 en rotation. Le carter 47, via une conception adaptée de flasques permet de contenir ces paliers 80, 90.

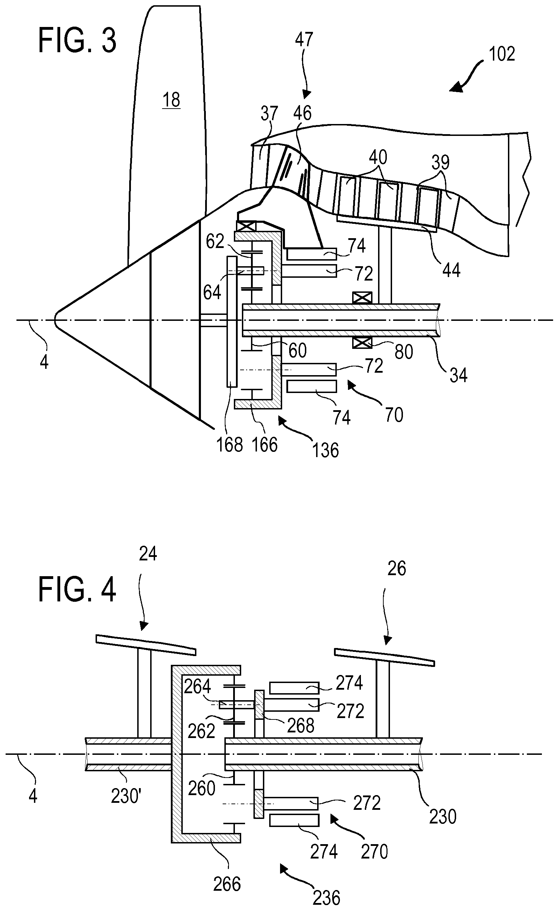

La figure 3 représente un turboréacteur 102 selon un deuxième mode de réalisation de l'invention. Seuls les éléments qui sont différents du mode de réalisation de la figure 2 sont incrémentés de 100.

Le train épicycloïdal 136 est composé d'un planétaire intérieur 60, de satellites 62 ayant des axes 64, d'un porte-satellite 168 et d'une couronne 166. Dans ce mode de réalisation, le rotor 72 est solidaire de la couronne 166 et la soufflante 18 est solidaire du porte-satellite 168.

Le fonctionnement et la flexibilité de fonctionnement du système sont identiques à ceux de la conception de la figure 2. Seuls les rapports de réductions sont différents puisque la soufflante 18 est solidaire du porte-satellite 168 au lieu d'être solidaire de la couronne 166.

Dans les deux exemples des figures 2 et 3, le moteur 70 est coaxial à l'axe 4. Il est toutefois possible, selon l'encombrement au cœur du turboréacteur , d'excentrer le rotor et donc de connecter le porte-satellite 68 ou la couronne 166 au rotor 72 au moyen d'une courroie ou d'un engrenage.

Dans un mode de réalisation non représenté, certaines aubes du compresseur 24, notamment les aubes statoriques contrarotatives peuvent être solidaires du rotor 72.

La figure 4 représente une partie du turboréacteur 202, dans un troisième mode de réalisation, combinable avec les autres modes de réalisation. En substance, un train épicycloïdal 236 relie un arbre de transmission 230 entraîné par la turbine 28 à un arbre de transmission 230' secondaire qui entraîne la soufflante.

L'arbre secondaire 230' peut jouer le rôle de l'arbre noté 34 sur les figures 2 et 3, directement, ou indirectement, via un réducteur adapté.

Le compresseur basse-pression 24 est entraîné par l'arbre secondaire 230' alors que le compresseur haute-pression 26 est entraîné par l'arbre 230. Un moteur électrique 270 peut être prévu pour que son rotor 272 soit solidaire du porte-satellite 268 du train 236. Selon un fonctionnement équivalent à celui des trains 36 ou 136, le moteur électrique 270 permet de réguler continûment le ratio de réduction des vitesses entre les compresseurs 24, 26 ou de récupérer de l'énergie cinétique. Le rotor 272 du moteur électrique 270 peut alternativement être solidaire de la couronne 266 du train 236.

Dans un exemple non représenté, l'arbre 34 solidaire de la turbine 32 traverse le train 236 de sorte à entraîner le compresseur basse-pression 24 et la couronne du train 236. Le planétaire intérieur 260 est emmanché autour et tourne librement autour de l'arbre 34, pour entraîner le compresseur haute-pression 26. Un moteur électrique peut être solidaire du porte-satellite du train 236. Alternativement, le moteur peut être solidaire de la couronne du train 236 et l'arbre 34 peut entraîner le porte-satellite du train 236.

Dans un exemple non représenté, l'un des compresseurs 24, 26 peut être entraîné par le porte-satellite.

Par construction du train épicycloïdal inter-compresseur, ou par le contrôle de la vitesse et/ou du sens de rotation du moteur électrique, les rotors des compresseurs peuvent tourner dans des directions opposées.

Dans un autre mode de réalisation non représenté, et combinable aux modes de réalisation précédent, un train épicycloïdal et optionnellement un moteur électrique, selon le même montage et le même fonctionnement que ce qui est décrit plus haut, est/sont prévu(s) entre les deux arbres 30, 34 de transmission des turbines 28, 32.

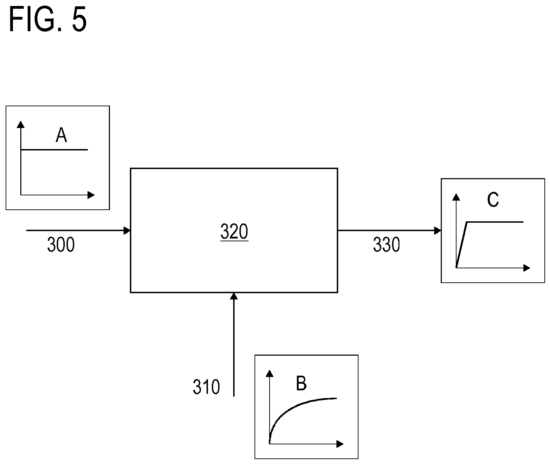

La figure 5 décrit schématiquement l'impact de la présence du moteur électrique sur la vitesse de la soufflante 18. Une valeur de consigne 300 est donnée par un utilisateur pour la vitesse ou le couple désiré de la soufflante. Une valeur 310 de la vitesse ou du couple de l'arbre 34, 230' est mesurée au même instant. En fonction des rapports de nombre de dents ou de diamètres des différents éléments du train épicycloïdal, un calcul 320 est effectué qui dicte la vitesse ou le couple 330 du rotor 72 du moteur électrique 70 qu'il faut viser pour obtenir la valeur de consigne 300, à partir de la valeur mesurée 310.

Les graphiques illustrent, en fonction du temps, ces différentes valeurs : le graphique A illustre la consigne qui est une valeur constante, du moins à l'échelle de temps dont il s'agit ici. La vitesse / le couple de la turbine augmente doucement avec le temps comme représenté sur la courbe B, induit par l'augmentation des gaz et de la compression. Cette courbe B illustre également la vitesse /le couple de la soufflante, en l'absence du moteur électrique. La courbe C est la vitesse/le couple réel de la soufflante obtenu grâce à l'action du moteur électrique. Ainsi, l'impact de l'utilisation du moteur électrique est bien montré sur la courbe C pour laquelle le régime transitoire est beaucoup plus bref que pour la courbe B.

La mesure de la vitesse / du couple, et la commande du moteur électrique se fait à tout instant pour faire évoluer la valeur 330 en fonction des changements progressifs de la valeur 310. La valeur 330 évolue donc selon la courbe B vers une valeur stationnaire.

## Revendications

1. Turboréacteur d'aéronef (2, 202), comprenant :
- un train épicycloïdal (36) comprenant un planétaire interne (60) , une couronne (66) et un porte-satellite (68) ;
- une turbine (28, 32), entraînant en rotation un arbre de transmission (34, 230') solidaire en rotation avec le planétaire interne (60) du train épicycloïdal (36) ;
- une soufflante (18) solidaire de la couronne (66) du train épicycloïdal (36) ; et
- une machine électrique (70) comprenant un rotor (72) et un stator (74), le rotor (72) étant solidaire du porte-satellite (68) du train épicycloïdal (36), **caractérisé en ce que** l'axe de rotation du rotor (72) du moteur électrique (70) est confondu à l'axe (4) de rotation de l'arbre de transmission (34, 230').

2. Turboréacteur d'aéronef (102, 202), comprenant :
- un train épicycloïdal (136) comprenant un planétaire interne (60) , une couronne (166) et un porte-satellite (168) ;
- une turbine (28, 32), entraînant en rotation un arbre de transmission (34, 230') solidaire en rotation avec le planétaire interne (60) du train épicycloïdal (136) ;
- une soufflante (18) solidaire du porte-satellite (168) du train épicycloïdal (136) ; et
- une machine électrique (70) comprenant un rotor (72) et un stator (74), le rotor (72) étant solidaire de la couronne (166) du train épicycloïdal (136), **caractérisé en ce que** l'axe de rotation du rotor (72) du moteur électrique (70) est confondu à l'axe (4) de rotation de l'arbre de transmission (34, 230').

3. Turboréacteur (2, 102, 202) selon l'une quelconque des revendications 1 ou 2, **caractérisé en ce qu'**il comprend des moyens de variation de la vitesse et du sens de rotation du rotor (72) du moteur électrique (70).

4. Turboréacteur (2, 102, 202) selon l'une quelconque des revendications 1 à 3, **caractérisé en ce qu'**il comprend un compresseur basse-pression (24) et un compresseur haute-pression (26), le compresseur basse-pression (24) étant entraîné en rotation directement par l'arbre de transmission (34) et le compresseur haute-pression (26) étant entraîné en rotation par l'arbre de transmission (34) via un train d'engrenage.

5. Turboréacteur (2, 102, 202) selon la revendication précédente, **caractérisé en ce que** le train d'engrenage est un train épicycloïdal (236).

6. Turboréacteur (2, 102, 202) selon la revendication 4 ou 5, **caractérisé en ce que** le train d'engrenage est tel que les rotors des compresseurs (24, 26) tournent dans des sens opposés l'un de l'autre.

7. Turboréacteur (2, 102, 202) selon l'une quelconque des revendications 1 à 6, comprenant au moins un compresseur muni d'aubes rotoriques contra rotatives, au moins une rangée d'aubes rotoriques étant entraînées par l'arbre de transmission et au moins une rangée d'aubes rotoriques étant entraînées en direction opposée par le moteur électrique.

8. Turboréacteur (2, 102, 202) selon l'une quelconque des revendications 1 à 7, **caractérisé en ce que** le stator (74) du moteur électrique (70) est solidaire du carter (47) du turboréacteur (2, 102, 202).

9. Turboréacteur (2, 102, 202) selon l'une quelconque des revendications 1 à 8, **caractérisé en ce que** des moyens mécaniques sont prévus pour solidariser le rotor (72) et le stator (74) du moteur électrique (70), notamment un embrayage frein.

10. Turboréacteur (2, 102, 202) selon l'une des revendications 1 à 9, **caractérisé en ce qu'**il comprend une turbine basse-pression (32) et une turbine haute-pression (28), l'arbre de transmission (34, 230') solidaire du planétaire intérieur (60) étant entraîné par la turbine basse-pression (32).

11. Procédé de mise en œuvre du turboréacteur (2, 102, 202) selon l'une quelconque des revendications 1 à 10, **caractérisé en ce qu'**il comprend une étape de maintenance lors de laquelle la soufflante (18) est maintenue fixe et la turbine (28, 32) est entraînée en rotation par le moteur électrique (70).

12. Procédé de mise en œuvre d'un aéronef comprenant une étape de roulage au sol, le procédé étant **caractérisé en ce que** l'aéronef est muni d'un turboréacteur (2, 102, 202) selon l'une quelconque des revendications 1 à 10 et **en ce que** le roulage au sol est induit par la rotation de la soufflante (18) à l'aide du moteur électrique (70).

## Patentansprüche

1. Ein Flugzeug-Turbotriebwerk (2, 202), das Folgendes umfasst:
- ein Planetengetriebe (36) mit einem innen liegenden Sonnenrad (60), einem Hohlrad (66) und einem Planetenträger (68).
- eine Turbine (28, 32), die eine mit dem inneren Sonnenrad (60) des Planetengetriebes (36) fest verbundene Übertragungswelle (34, 230') in Drehung versetzt
- eine elektrische Maschine (70) mit einem Rotor (72) und einem Stator (74), wobei der Rotor (72) fest mit dem Planetenträger (68) des Planetengetriebes (36) verbunden und **dadurch gekennzeichnet, dass** die Drehachse des Rotors (72) des Elektromotors (70) mit der Drehachse (4) der Übertragungswelle (34, 230') zusammenfällt.

2. Ein Flugzeug-Turbotriebwerk (102, 202), das Folgendes umfasst:
- ein Planetengetriebe (136) mit einem innen liegenden Sonnenrad (60), einem Hohlrad (166) und einem Planetenträger (168)
- eine Turbine (28, 32), die eine mit dem inneren Sonnenrad (60) des Planetengetriebes (136) fest verbundene Übertragungswelle (34, 230') in Drehung versetzt
- ein Gebläse (18), das fest mit dem Planetenträger (168) des Planetengetriebes (136) verbunden ist; und
- eine elektrische Maschine (70) mit einem Rotor (72) und einem Stator (74), wobei der Rotor (72) fest mit dem Hohlrad (166) des Planetengetriebes (136) verbunden und **dadurch gekennzeichnet, dass** die Drehachse des Rotors (72) des Elektromotors (70) mit der Drehachse (4) der Übertragungswelle (34, 230') zusammenfällt.

3. Turbotriebwerk (2, 102, 202) nach dem Patentanspruch 1 oder 2, **dadurch gekennzeichnet, dass** es Vorrichtungen zur Geschwindigkeitsveränderung und zur Umkehr der Drehrichtung des Rotors (72) des Elektromotors (70) umfasst.

4. Turbotriebwerk (2, 102, 202) nach einem der Patentansprüche 1 bis 3, **dadurch gekennzeichnet, dass** es einen Niederdruckverdichter (24) und einen Hochdruckverdichter (26) umfasst, wobei der Niederdruckverdichter (24) direkt von der Antriebswelle (34) und der Hochdruckverdichter (26) von der Antriebswelle (34) über einen Getriebezug in Drehung versetzt wird.

5. Turbotriebwerk (2, 102, 202) nach dem vorhergehenden Patentanspruch, bei dem der Getriebezug aus einem Planetengetriebe (236) besteht.

6. Turbotriebwerk (2, 102, 202) nach Patentanspruch 4 oder 5, welches sich **dadurch kennzeichnet, dass** der Getriebezug so beschaffen ist, dass die Rotoren der Verdichter (24, 26) in entgegengesetzter Richtung zueinander rotieren.

7. Turbotriebwerk (2, 102, 202) nach einem der Ansprüche 1 bis 6, mit mindestens einem Verdichter mit gegenläufigen Rotorschaufeln, wobei mindestens eine Reihe von Rotorschaufeln von der Antriebswelle angetrieben wird und mindestens eine Reihe von Rotorschaufeln in entgegengesetzter Richtung vom Elektromotor angetrieben wird.

8. Turbotriebwerk (2, 102, 202) nach einem der Patentansprüche 1 bis 7, **dadurch gekennzeichnet, dass** der Stator (74) des Elektromotors (70) fest mit dem Gehäuse (47) des Turbotriebwerks (2, 102, 202) verbunden ist.

9. Turbotriebwerk (2, 102, 202) nach einem der Patentansprüche 1 bis 8, **dadurch gekennzeichnet, dass** mechanische Vorrichtungen zur Verbindung von Rotor (72) und Stator (74) des Elektromotors (70), insbesondere eine Bremskupplung, vorgesehen sind.

10. Turbotriebwerk (2, 102, 202) nach einem der Patentansprüche 1 bis 9, **dadurch gekennzeichnet, dass** es eine Niederdruckturbine (32) und eine Hochdruckturbine (28) umfasst, wobei die mit dem inneren Sonnenrad (60) verbundene Übertragungswelle (34, 230') von der Niederdruckturbine (32) angetrieben wird.

11. Betriebsmodus des Turbotriebwerks (2, 102, 202) nach einem der Patentansprüche 1 bis 10, der **dadurch gekennzeichnet ist, dass** er einen Zwischenschritt umfasst, bei dem das Gebläse (18) stillsteht und die Turbine (28, 32) durch den Elektromotor (70) in Drehung versetzt wird.

12. Verfahren zum Betrieb eines Flugzeugs, welches einen Rollvorgang umfasst und **dadurch gekennzeichnet, dass** das Flugzeug mit einem Turbotriebwerk (2, 102, 202) nach einem der Patentansprüche 1 bis 10 ausgestattet ist und der Rollvorgang durch die Rotation des Gebläses (18) mittels Elektromotor (70) ausgelöst wird.

## Claims

1. Aircraft turbojet (2, 202), comprising:
- an epicyclic gear (36) comprising a sun gear (60), an outer ring (66) and a planet carrier (68);
- a turbine (28, 32), driving in rotation a transmission shaft (34, 230') integral in rotation with the sun gear (60) of the epicyclic gear (36);
- a fan (18) integral with the outer ring (66) of the epicyclic gear (36); and
- an electric motor (70) comprising a rotor (72) and a stator (74), the rotor (72) being integral with the planet carrier (68) of the epicyclic gear (36), **characterized in that** the axis of rotation of the rotor (72) of the electric motor (70) is coincident with the axis (4) of rotation of the transmission shaft (34, 230').

2. Aircraft turbojet (102, 202), comprising:
- an epicyclic gear (136) comprising a sun gear (60), an outer ring (166) and a planet carrier (168);
- a turbine (28, 32), driving in rotation a transmission shaft (34, 230') integral in rotation with the sun gear (60) of the epicyclic gear (136);
- a fan (18) integral with the planet carrier (168) of the epicyclic gear (136); and
- an electric motor (70) comprising a rotor (72) and a stator (74), the rotor (72) being integral with the outer ring (166) of the epicyclic gear (136), **characterized in that** the axis of rotation of the rotor (72) of the electric motor (70) is coincident with the axis (4) of rotation of the transmission shaft (34, 230').

3. Turbojet engine (2, 102, 202) according to any one of claims 1 or 2, **characterized in that** it comprises means for varying the speed and the direction of rotation of the rotor (72) of the electric motor (70).

4. Turbojet engine (2, 102, 202) according to any one of claims 1 to 3, **characterized in that** it comprises a low-pressure compressor (24) and a high-pressure compressor (26), the low-pressure compressor (24) being driven in rotation directly by the drive shaft (34) and the high-pressure compressor (26) being driven in rotation by the drive shaft (34) via a gear train.

5. Turbojet engine (2, 102, 202) according to the preceding claim, **characterized in that** the gear is an epicyclic gear (236).

6. Turbojet engine (2, 102, 202) according to claim 4 or 5, **characterized in that** the gear is such that the rotors of the compressors (24, 26) rotate in directions opposite from one another.

7. Turbojet engine (2, 102, 202) according to any one of claims 1 to 6, comprising at least one compressor provided with counter-rotating rotor blades, at least one row of rotor blades being driven by the transmission shaft and at least one row of rotor blades being driven in the opposite direction by the electric motor.

8. Turbojet engine (2, 102, 202) according to any one of claims 1 to 7, **characterized in that** the stator (74) of the electric motor (70) is integral with the casing (47) of the turbojet engine (2, 102, 202).

9. Turbojet engine (2, 102, 202) according to any one of claims 1 to 8, **characterized in that** mechanical means are provided for securing the rotor (72) to the stator (74) of the electric motor (70), such as a brake clutch.

10. Turbojet engine (2, 102, 202) according to any of claims 1 to 9, **characterized in that** it comprises a low-pressure turbine (32) and a high-pressure turbine (28), the transmission shaft (34, 230') integral with the sun gear (60) being driven by the low-pressure turbine (32).

11. Method for implementing the turbojet engine (2, 102, 202) according to any one of claims 1 to 10, **characterized in that** it comprises a maintenance step during which the fan (18) is kept stationary and the turbine (28, 32) is rotated by the electric motor (70).

12. Method of implementing an aircraft comprising a taxiing step on the ground, the method being **characterized in that** the aircraft is provided with a turbojet engine (2, 102, 202) according to any one of claims 1 at 10 and **in that** the rolling on the ground is induced by the rotation of the fan (18) using the electric motor (70).
